# EUROPEAN PATENT SPECIFICATION

(11) **EP 2 952 755 B1**
(45) Date of publication and mention of the grant of the patent: **05.08.2020**
(21) Application number: 15170611.6
(22) Date of filing: 03.06.2015
(51) Int. Cl.: F16B 31/02, F16L 47/04, F16L 17/06

(54) **TORQUE LIMITING CONNECTING COMPONENT**
DREHMOMENTBEGRENZENDES VERBINDUNGSELEMENT
COMPOSANT DE CONNEXION À LIMITATION DE COUPLE

(30) Priority: 03.06.2014 DE 102014107817
(43) Date of publication of application: 09.12.2015
(73) Proprietor: Gealan Formteile GmbH, 95145 Oberkotzau (DE)
(72) Inventor: Laubmann, Gerhard, 95119 Naila (DE); Saunus, Christian, 08223 Grünbach (DE)
(74) Representative: Fleuchaus, Michael A.

(56) References cited:
- US-A1- 2007 267 869
- US-A1- 2013 076 030
- US-B1- 6 309 154

## Description

### Technical Field

The present invention is directed to a connecting component for limiting the force, specifically torque, used in securing a conducting element to said connecting component. The invention is particularly applicable to a torque limiting fitting for conduits of a heating system.

### Background of the Invention

Interconnecting fitting structures for connecting/disconnecting conduits are known in the art, They are used to facilitate the connection of the conduits, commonly pipes and tubes, to another conduit or to a supplier/receiver/intermediary unit for the conducting medium. The purpose of these fittings may be to act as an adapter, extension means or as a securing means, amongst other functions.

In conventional systems, these fittings are typically made of metal, in particular brass or another alloy to connect to the associated components. Metal has been conventionally chosen for industrial and commercial use since it is very durable, as it is a very resilient material, and is a long serving material which, under normal circumstances, tends to last for numerous years. Metal fittings do not crack easily and can withstand high temperatures, useful for heating systems, for example. Other factors for using metal are its versatility, malleability and, for some metals or alloys, resistance to corrosion. A metal fitting normally features a threaded adapter together with an axially acting gasket. On the external thread of the adapter, a nut is then mounted which compresses the gasket located between the fitting and the conduit to ensure a properly sealed connection.

US 6,309,154 B1, for example, describes a torque-limiting assembly including a collar, a locking ring and a sleeve member, wherein the collar has a plurality of circumferentially-disposed surfaces for engaging the torque-applying device and wherein the sleeve member is non-rotatably coupled to at least one of the collars and the fitting.

Although the quality of such metal fittings is high, these components are also expensive due to the high material price and the involved work that goes into processing the metal components, typically by moulding and/or drilling/milling. As more complex fittings become necessary for a wide range of systems and conduits, there is a strong desire to provide a more cost effective alternative.

Plastic is desired as a cheaper alternative material to use in manufacturing fittings due to the lower material price. Additionally, the ease of processing for plastic components in comparison with metal components would further lower the cost of manufacture. However, a conventional metal fitting substituted with plastic material is not appropriately functional in that the usual tightening of the nut, and the usual force required to seal the conventional gasket, requires a torque too great for a plastic fitting to handle.

With the existing tools for fastening a metal fitting, a person installing the fitting simply uses said tool, e.g. a wrench, and tightens the fitting using significant strength to ensure a tight connection. There is often no limitation of the assembling torque observed and excess torque applied to a fully tightened nut will transfer completely to the fitting. For metal fittings, this action poses less concern due to the strength of the material.

However, plastic material is not nearly as strong as metal and there is thus a high chance that the fitting may be damaged during assembly if the same torque used to secure a metal fitting is applied to a plastic fitting. A simple notation of the maximum torque for assembling a plastic fitting is insufficient for preventing excess torque being applied during assembly, nor is it a practical solution for the assembler using existing tools.

Therefore, in order to realize a fitting made of plastic, the conventional construction of metal fitting is not ideal.

Other problems that traditional fittings face include potential in loosening of a nut from the fitting, for example in environments exposed to vibration. Gradual loosening of the fitting over time increasing the chances of failure of the fitting to keep a secure connection. It would be desirable to have a fitting which overcomes these problems.

The object of the present invention is thus directed to providing an alternative fitting component to those of the prior art. In particular, the invention seeks to provide an improved fitting component made of plastic, which, in particular, prevents application of excessive torque, is cheaper to manufacture, and overcomes other disadvantages of known fittings.

These and other objects are in part solved by a fitting as defined in independent claim 1. Specific embodiments of the present invention are the subject matter of the dependent claims.

### General Description

Specifically, the present invention is directed to a torque limiting fitting comprising a first tubular element having a first end for receiving a first conducting member and a second end for receiving a second conducting member, the first end including a coupling portion for engaging with a coupling element, and a second tubular element coupled to and rotatable relative to the first tubular element. The fitting further comprises at least one engagement portion having a first shape, and at least one receiving portion having a second shape, where the first shape is arranged to allow transmission of torque to the second shape in at least one direction, and one of the engagement portion and the receiving portion is arranged at a first surface of the first tubular element and the respective other one is arranged at a second surface of the second tubular element.

According to the invention, the torque limiting fitting is characterized in that at least one deformable section is provided on the first or second tubular element, the deformable section extending along an axial length of at least a part of the first or second tubular element, respectively, and having a first edge and a second edge. The deformable section has the engagement portion or the receiving portion arranged thereon and able to deflect radially during relative rotational movement of the first and second tubular element, wherein such radial deflection is against an elastic return force of the deformable section.

The engagement portion and the receiving portion are configured to engage in a first direction of rotation of the first tubular element relative to the second tubular element, wherein a first torque applied to the first tubular element or the second tubular element having the engagement portion arranged thereto is transferred to the respective other one of the second tubular element and the first tubular element such that there is substantially no relative rotational movement between the first tubular element and the second tubular element, and the deformable section substantially does not deflect radially.

The engagement portion and the receiving portion are configured to engage in a second direction of rotation of the first tubular element relative to the second tubular element, wherein a second torque applied to the first tubular element or the second tubular element having the engagement portion arranged thereto is transferred to the respective other one of the second tubular element and the first tubular element such that:
(a) there is substantially no relative rotational movement between the first tubular element and the second tubular element, and the deformable section substantially does not deflect radially, when the second torque is below or equal to a maximum torque threshold, and
(b) there is relative rotational movement between the first tubular element and the second tubular element, and the deformable section deflects radially when the second torque exceeds the maximum torque threshold.

Accordingly, the first tubular member is coupled to the conducting members - in particular fluid conducting members - of the system while the second tubular member interacts with the first tubular member to control the amount of torque that can be applied to the fitting.

A conducting member is, for example, a conduit of a medium exchange system, representing any means for guiding the medium to be conducted to/from the system and can be, for example, a pipe or tube used in a fluid exchange system for conducting heat or other fluids such as a coolant.

The expression rotatable relative is not restricted to mean that the second tubular element itself is rotating but either the first and/or second tubular element can be rotated, such that the elements are rotatable with respect to one another.

At least one engagement portion and at least one receiving portion are provided in the fitting. Each type of portion is provided on a respective one of the first and second tubular element. These portions have a shape which interact as the means for transferring torque in the fitting between the first and the second tubular elements. While the first and second shapes interact, the shapes are not limited to be matching insofar as they are able to transmit torque in the required manner.

The terms engagement portion and receiving portion are not limited to a particular form, only denoting that these elements engage with the respective other portion type. For example, an engagement portion may have a wedge shape and the receiving portion may have a corresponding indented wedge shape or vice versa. The present invention is also not restricted to the same number of engagement portions and receiving portions as long as the prerequisite of a transmission of torque is met.

The deformable section has, at least to a certain limit, an elastic return force such that when the section is deflected, the elastic return force urges the section to return to the original position before the deflection. The deformable element may, for example, be spring-loaded or biased to the neutral position or simply made of a suitable material with elastic properties to provides the elastic return force.

When a torque is applied by either the first tubular element or the second tubular element to the respective other element, torque is transferred from the engagement portion to the receiving portion. The configuration of the engagement portion and the receiving portion is such that in a first direction of movement, e.g. in a first direction of rotation, the torque is substantially completely transferred from the engagement portion to the receiving portion with substantially no deflection of the deformable section nor relative movement between the first and second elements.

In a second direction of movement, e.g. in the second direction of rotation which is the opposite of the first direction of rotation, the configuration of the engagement portion and the receiving portion is such that below a maximum threshold, the torque is also substantially completely transferred from the engagement portion to the receiving portion with substantially no deflection of the deformable section nor relative movement between the first and second elements. However, once the torque exceeds a maximum torque threshold in this direction of movement, the engagement and receiving portions are configured such that the torque can no longer be completely transferred but radial deflection of the deformable section occurs.

This deflection will disengage the engagement portion(s) and the receiving portion(s) allowing relative movement between the first and second tubular elements. The configuration of the engagement portion(s) and the receiving portion(s) together with the deformable section(s) is also such that following relative movement of the first and second tubular element, the deformable section(s) return to the original position due to the elastic return force, in which engagement between disengage the engagement portion(s) and the receiving portion(s) will re-occur.

Accordingly, preferable, the fitting of the present invention is a two-element component (first and second tubular elements) configured to prevent a torque above a maximum threshold to be directly applied to the fitting in the securing direction. As any excess torque is not transferred beyond a certain point between the two tubular elements, an excess torque is released by the relative movement of the two elements.

The maximum torque threshold is set so as to ensure that the seal is sufficiently secured between the conducting members but to ensure also that excess torque is prevented from being applied. The result would be, for example, spinning of the movable tubular element with respect to the other tubular element once the seal is secure and a torque exceeding the maximum torque threshold is reached. In this manner, when applying a torque in a second direction of movement to a coupling element to couple a conduit to the first tubular element, the necessary axial force to activate the sealing is ensured, and on the other hand, the torque limit is low enough such that critical levels of stress are not applied to the material (e.g., plastic). This maximum torque is set by various properties of the tubular elements, deformable sections and the engagement and receiving portions arranged thereon. Examples of various properties will be indicated further below.

In the other direction of movement, i.e. the first direction of movement, namely for releasing the conducting member from the fitting, any torque applied is completely transferred to the tubular elements so that the coupling portion of the first tubular element is not movable relative to the second tubular element. This mechanism facilitates the uncoupling of the coupling element, such as a union nut, from the coupling portion of the fitting.

Over time, the difficulty of releasing the coupling element could be increased due to a variety of reasons, such as the deposition of materials to the connection which inhibit movement of the coupling element and deterioration of the various components due to exposure to the working environment. Having the aforementioned releasing mechanism in place supports the releasing process of the coupling element even when higher torque levels than the maximum torque threshold are required.

A fitting according to the present invention is thus very suitable to be constructed with plastic and foregoes many of the drawbacks associated with the unmodified implementation of metal fittings using plastic material.

Furthermore, the configuration of the present invention allows the fitting to be assembled in a relatively smoother and less complex manner. Since the maximum threshold is reached when the torque is no longer substantially completely transferred during fastening of the coupling element, the assembler of the fitting can easily determine when the connection has been securely made. A tactile or audible feedback is provided for to the assembler when the maximum torque threshold has been reached and relative movement of the tubular elements begins. The release of the coupling element in the opposite direction is also aided by the releasing mechanism described a bove.

Both of these features provide a practical means for securing and releasing the fitting without the necessity of using any special tools or equipment, a significant advantage over conventional fittings which either require special equipment or provide no indication when sufficient torque has been applied to seal the fitting.

In an embodiment of the invention, the second tubular element is coupled to the first tubular element by being arranged substantially coaxially about the outer surface of the first tubular element or vice versa.

This embodiment is configured such that the first tubular element coupled to the conducting members serves as an inner element, where the second tubular element is provided around the surface of the first tubular element. In a particular example, the first tubular element contains the engagement portions and is rotatable while the second tubular element, provided around the first tubular element, includes the deformable section having the receiving portions and may be fixed to a housing. Rotation of the first tubular element (e.g., by application of a torque to a coupling element screwed to the coupling portion) will either transfer substantially completely the torque and thus prevent relative movement of the tubular elements or the torque will be substantially not transferred such that there is relative movement between the first and second tubular element while the deformable sections having the receiving portions will deflect radially outwards so that the engagement portions and the receiving portion are temporarily disengaged. Movement of the engagement portion past the receiving portion results in the deformable section contracting inwardly from the elastic return force and thus re-engagement of the engagement portion with the next receiving portion in the direction of rotation.

An inner/outer tubular element setup provides a space efficient implementation of the two-element fitting. Additionally, it would be easy to adjust the maximum torque threshold by swapping an outer tubular element of one construction with another outer tubular element of another construction, while the inner tubular element may remain unaltered.

In another embodiment, the torque limiting fitting has a plurality of deformable sections, wherein each of the plurality of deformable sections are arranged substantially uniformly about the circumference of the first or second tubular element, each of the deformable sections having at least one of an engagement portion or a receiving portion arranged thereon, and preferably but not necessarily a corresponding plurality of engagement portions or receiving portions, respectively, are arranged on the respective other second or first tubular element in a manner at least partially corresponding to the arrangement of the at least one engagement portion(s) or receiving portion(s) arranged on the deformable sections.

Uniform distribution of the gap portions and the deformable sections of the first or second tubular element, and uniform distribution of the engagement or receiving portion on the other of the second or first tubular element provides a balanced distribution of the stress resulting from the deflection of the deformable sections. Since stress is evenly distributed, the components of the fitting will avoid a focal point of stress leading to better durability of the component. Further, a steady and comfortable motion is achieved when the maximum torque threshold has been exceeded.

Non-uniform distributions may be applied to allow for a greater variety of tubular elements to be interchangeably used together and/or produce a unique tactile feel when the applied torque exceeds the maximum torque threshold.

Providing the engagement portion or receiving portion on the deformable section provides an effective manner by which to facilitate deformation of the deformable section while still being engaged but also an easy return to the neutral position after the engagement portion or receiving portion become disengaged. It is noted that a deformable section may have more than one engagement portion or receiving portion and also a mix of these two types of portions. Only partial correspondence between the engagement portions and receiving portions are necessary insofar as the deformable section may be deflected above the maximum torque threshold and return to a neutral position during rotation in one direction and, at the same time, inhibiting relative movement in the other direction.

In another embodiment, the first or the second tubular element having the deformable section arranged thereon further comprises a connecting section for connecting respective first and second edges of two neighbouring deformable sections. Optionally, the connecting section has a curved shape which comprises two transition portions connecting said first and second edges, each transition portion having a bionic shape.

The connecting section connects at least a portion of separation of neighbouring deformable sections. The form of this connecting section may also aid in the increased durability of the present invention as a curve shaped connection section offers superior distribution of stress on the stress points of the deformable element in comparison to, for example, a connecting section having sharply angled portions. Specifically, transition portions of the connecting section having a bionic shape is advantageous for reducing the mechanical stress during deflection of the neighbouring deformable sections. Accordingly, the flexural strength of the deformable element is increased leading to a longer lasting fitting and better structural integrity.

In another embodiment of the present invention, the first or the second tubular element not having the deformable section arranged thereon comprises a conical section which is at least partially overlapped by at least a part of the deformable section.

In this manner, the elastic return force of the deformable section may be affected by how much it overlaps with the conical section - and "spread" open thereby - and also the specific geometry of the conical section. The form of the tubular element having the conical section can thus play a role in configuring the maximum torque threshold, and variance of the conical section is an effective way to provide flexibility in this aspect, e.g. by choosing different levels of overlap between the conical section of one tubular element and the deformable section of the respective other. This can either be done during assembly of the fitting of the present invention or, for example, during assembly of the connection by applying the second tubular element to the first tubular element in a specific predefined manner according to the requirements.

In another embodiment, the first tubular element is axially displaceable relative to the second tubular element.

Axial displacement of the first and second tubular elements adjust the point of contact between the engagement portion and the receiving portion and, in the case of a conically shaped first or second tubular element, allows the elastic return force of the deformable section to be changed even with the same first and second tubular elements by modifying the overlap between the conical section of one tubular element and the deformable section of the respective other. In one aspect, the first and second shapes of the engagement portion and the receiving portion, respectively, and specifically the axial dimension of the shapes, govern the change (if any) to the deformable section as the first and second tubular elements are axial displaced. In combination with a conical section of the tubular element, the axial displacement of the first and second tubular elements would thus provide an effective manner to adjust the maximum torque threshold *in situ.* This is achieved by increasing or decreasing a bias to the elastic return force of the deformable elements, in particular, by addition of a predefined radial deflection offset which is depending on the axial position of the first tubular element relative to the second tubular element.

Axial displacement in the present invention may be achieved by, for example, sliding one of the tubular elements along the other tubular element, detaching one of the tubular elements from the other tubular element and subsequently reattaching the tubular element at a different axial position with respect to the other tubular element, or combinations thereof.

In an embodiment, the first tubular element or the second tubular element may have a plurality of second interlocking means arranged along the axial length thereof, each of the plurality of second interlocking means positioned at a predetermined axial position, and the respective other tubular element having a first interlocking means for interlocking with at least one of the plurality of the second interlocking means to define the axial position of the first tubular element relative to the second tubular element.

The interlocking means allow the axial position of the tubular elements to be easily set in a defined manner. The form of the interlocking means may be a plurality of grooves along the circumference in one tubular element and a matching protrusion arranged to engage with at least one of the grooves in the other tubular element. It is noted that since the first and second tubular elements may need to be rotatable relative to each other, the interlocking means would need to allow for such movement. In another example, a plurality of hooked slots may be used together with a matching hook element, whereby a specific interaction is required to release the connection. Any configuration of the interlocking means could be used, insofar as the relative axial position of the first and second tubular elements can be securely set and released. Moreover, the axial position may be set, for example, sliding one of the tubular elements along the other or detaching and reattaching one of the tubular elements to the other at a different axial position.

In the present invention, the elastic return force and/or the maximum force threshold may be defined by: the geometry and/or the material of the engagement portion, the geometry and/or material of the receiving portion, particularly the angle, position and the height of the engagement portion and/or the receiving portion, the number of receiving portions and engagement portions, the stiffness, material and/or geometry of the deformable section, the distance between respective first and second edges of neighbouring deformable sections, the number of deformable sections, the ratio between said distance and said geometry of the deformable sections, and combinations thereof. The combination of these listed attributes provide varying degrees of control on the deformable section, specifically the elastic return force, and in turn the maximum force threshold.

In an embodiment of the invention, the first tubular element and the second tubular element are assembled by snap fastening or produced by 2-component injection moulding, in particular assembly injection moulding,

The first and second tubular elements can be assembled together by these processes. A snap fastener allows the tubular elements to be separately made and attached thereto - or removed and re-attached in the course of assembly of the tube connection, while the 2-component injection moulding would create the parts in a single process, A single process would provide a more homogenous fitting. However, In this case, the fitting must still be able to meet the requirements of the invention, namely the relative rotation of the first and second tubular elements. In this regard, assembly injection moulding would represent an option for producing a fitting of the invention in such an injection moulding process.

In an embodiment of the invention, the coupling portion comprises a threaded portion and the coupling element comprises a union nut. In a further embodiment, the coupling portion further comprises a plurality of stopper recesses along a circumferential length of the coupling portion. Accordingly, the coupling element can further comprise a hook, the hook portion engaging with at least one of the plurality of stopper recesses to inhibit rotation of the coupling element in at least one direction of rotation. To enable rotation of the coupling element relative to the coupling portion the hook portion would need to be disengaged from the recesses.

The configuration of a fitting coupling together with a union nut via a hook/recess mechanism aids in maintaining the nut in secure position. By using a hook/recess system between the nut and the threaded portion, the nut can be prevented from movement in one direction, generally the loosening direction. Only by releasing a latch of the hook may the nut be freed to move in this direction. This is an advantage over a conventional coupling elements, such as a standard nut, since conventional parts have a tendency to slowly loosen over time, in particular, when the torques applied are low. Retightening of the coupling element must not be checked as frequently with the latch hook mechanism of the present embodiment. This feature is also beneficial in the present invention since the coupling element can be assembled without a tool and at low levels of torque and there would otherwise be a high risk of the coupling element loosening without a securing mechanism. In this regard, the latch/hook mechanism is suitable to be used to improve the fitting of the invention, in particular for tool free assembly.

In another embodiment of the present invention, the first tubular element or second tubular element comprises a mounting structure by which it is fixable relative to a stationary component for preventing movement and/or rotation of the respective tubular element.

A mounting structure restricts the movement and/or rotation of one of the first or second tubular elements by fixing it to a stationary component such as an external housing. Relative rotation between the first and second tubular elements according to the invention is easily achieved, whereby one element is rotatable and the other element fixed by the mounting structure. For example, the fixed component may be in the form of a hexagon and may be provided with the tubular element having the deformable section, the hexagon being arranged on the end opposite to the deformable section and connected to a housing.

The features of the above embodiments are not mutually exclusive and can be used in any appropriate combination. The invention will be further described by the following detailed description of exemplary embodiments.

### Brief Description of the Figures

**Figure 1** illustrates a fitting according to a first embodiment of the present invention.
**Figure 2** illustrates a front view of the fitting according to figure 1.
**Figure 3** illustrates a cross-sectional side view of a fitting according to the invention.
**Figure 4** illustrates a fitting according to the invention with a coupling element attached.
**Figure 5** illustrates a cut-view of the fitting according to figure 4.
**Figure 6** illustrates a zoom view of the connecting section of the fitting according to figure 4.
**Figure 7a** illustrates a cross-sectional side view of a fitting of the invention with a first relative axial position between first and second tubular element.
**Figure 7b** illustrates a cross-sectional side view of a fitting of the invention with a second relative axial position between first and second tubular element.

### Detailed Description

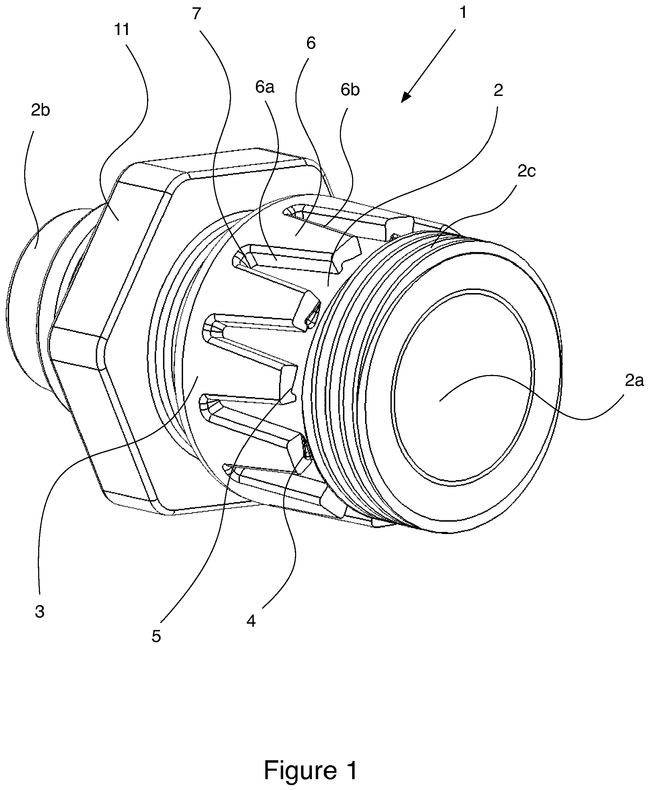

The following description is directed to exemplary embodiments of the present invention as illustrated in **figures 1 to 7b****.** These embodiments are illustrative only and the present invention is not limited to these specific embodiments. Rather, the exemplary embodiments are meant to impart a more thorough understanding of the functions of the elements of the present invention and how they interact. Like reference numerals refer to like elements or elements having a similar function throughout the following description.

Figure 1 depicts a torque limiting fitting 1 according to a first embodiment of the present invention. The fitting 1 is a two-part component comprising a first tubular element 2 and a second tubular element 3. In this embodiment, the first tubular element 2 and the second tubular element 3 are coaxial, with the second tubular element 3 being arranged about the outer surface of the first tubular element 2. The present invention however is not limited to this specific configuration and the tubular elements may be connected in a different manner, for example, in an adjacent manner or with the first tubular element being arranged about the outer surface of the second tubular element instead. These tubular elements may be connected by snap fastening the two elements or by an injection moulding process, particularly a 2-components injection moulding such as assembly injection moulding. The latter process consists of a first step of using injection moulding to create the inner component and then in a second step, using injection moulding to create the outer component. In this manner, the two components are moulded separately but in a single process. The separate moulding step allows the elements to be distinct and individually movable, and in the present invention relatively rotatable with respect to one another.

The first tubular element 2 has a first end 2a for receiving a conducting member, such as a tube or pipe. The first end 2a also includes a coupling portion 2c having a threaded portion for receiving a coupling element, such as a nut, for securing the conducting member with the fitting 1. The other end 2b of the tubular element 2 is adapted to receive another conducting member. In this embodiment, the conducting medium is passed through the first tubular element 2 from one end to the other. The second tubular element 3 is provided on the outer surface of the first tubular element 2 and does not contact the conducting medium.

The second tubular element 2 of this embodiment comprises a plurality of deformable sections 6 provided about the circumference thereof. Each pair of neighbouring deformable sections 6 is separated by a gap. The gap portions allow the deformable sections 6 to possess a certain degree of movement. Specifically, these gap portions have an axial length for facilitating radial deflection of the deformable section on either side of the gap. By having this gap portion, a section of the respective first or second tubular element, namely the deformable section, is given freedom to be urged away in a radial direction by the interaction of the receiving and engagement portions.

While a plurality of deformable sections 6 are given, the present invention is not limited in this manner. The present invention also functions if a single deformable section 6 is used. In this case, a gap portion would separate the two edges of the single deformable section. For example, a single deformable section could wrap around the circumference of the tubular memberfrom one side of the gap portion to the other side of the gap portion, forming a C shape in a frontal view.

A connecting section 7 is also provided connecting edges of two neighbouring deformable sections 6. In this example, the connecting section 7 is in the shape of a curve which provides increased flexibility and durability to the adjacent deformable sections 6 in comparison with a more sharply angled connection. In this embodiment, only one end of the gap area is shown to end in the connecting section 7 and the other end is free. The present invention also includes an embodiment in which the gap between neighbouring deformable sections 6 is enclosed. In this case, the deformable sections 6 could have two connecting portions, one at each end enclosing a gap portion. Additionally, although the gap portion in figure 1 is shown as a triangular shape, any shape would suffice as long as the requirements for allowing movement, and specifically radial deflection, of the deformable section 6 is met.

The second tubular element 3 may also comprise a mounting structure 11 for connecting with the first tubular element 2. In this embodiment, the mounting structure 11 is a hexagon and fixes the second tubular element 3 to the first tubular element 2. Although not shown, the mounting structure 11 is also connected to a stationary component (e.g., an external housing) in the medium transfer system such that the second tubular element 3 is fixed, i.e. not movable or rotatable. The second tubular element 3 is not mounted in such a way which also inhibits the first tubular element 2 from any movement. As will be described below, the first and second tubular elements must be able to rotate relative to each other.

As shown in figure 1, the first tubular element 2 and the second tubular element 3 contact in part at the deformable sections 6. The first tubular element 2 features a plurality of engagement portions 4 on a first surface facing the second tubular element. In this embodiment the engagement portions are in the shape of a wedge, however other shapes are possible. On each of the deformable sections 6 of the second tubular element 3, a second surface facing the first tubular element 2 has a receiving portion 5 in the form of a recess. These receiving portions 5 are configured to engage with the engagement portions 4. In this drawing, the number of engagement portions 4 is less than the number of receiving portions 5. The present invention includes embodiments wherein the number of engagement portions 4 are the same or greater than the number of receiving portions 5. Additionally, while this embodiment shows the engagement portions 4 and the receiving portions 5 matching in shape, other combinations of shapes which may or may not match are possible. However, the engagement portions 4 and receiving portions 5 must achieve a specific interaction as will be discussed below.

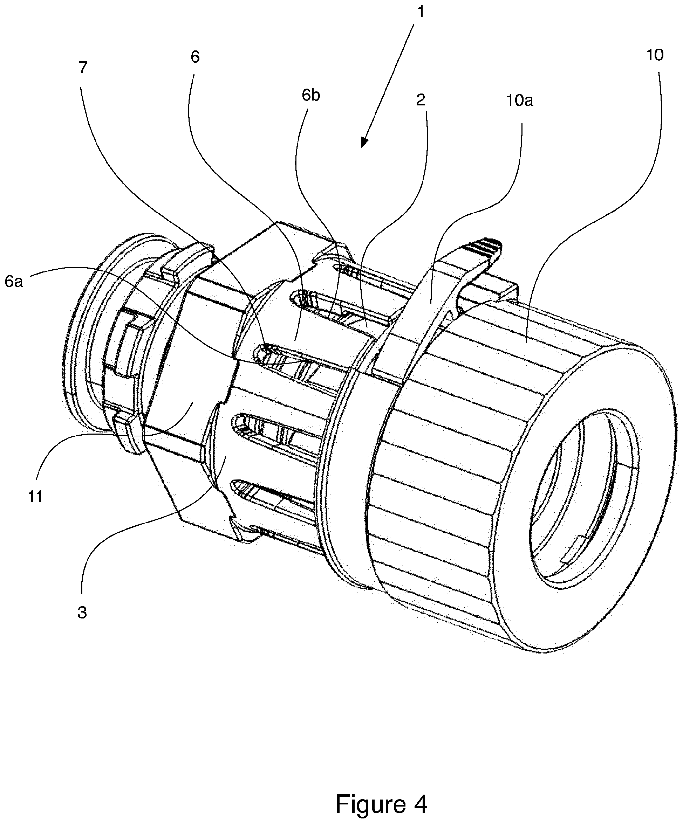

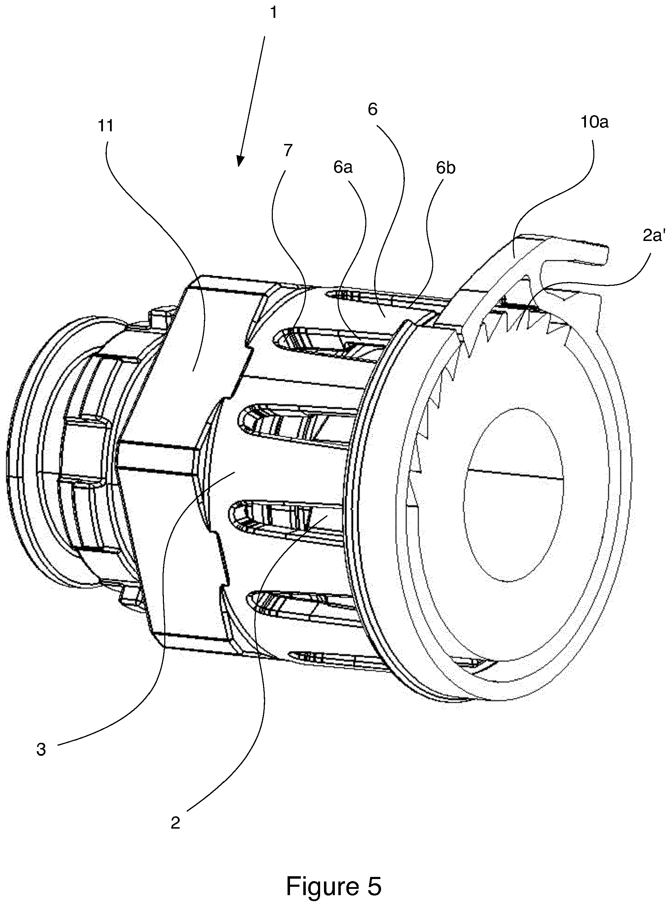

In the present invention, the engagement portion 4 and the receiving portion 5 are configured to limit when relative rotation of the first tubular element 2 and the second tubular element 3 may occur. In this embodiment the side walls of the first tubular element 2 and the second tubular element 3 which engage (i.e., contacting surfaces of the engagement portions 4 and the receiving portions 5, respectively) when the first tubular element 2 is rotated in a counter-clockwise direction are substantially perpendicular to the direction of movement. Since the second tubular element 3 is fixed and the force from the engagement portion 4 only urges the receiving portion in the direction of rotation, the torque applied to the first tubular element 2 as it is rotated in the counter-clockwise is substantially completely transferred to the second tubular element 3, particularly the deformable section 6. The first tubular element 2 is hence substantially inhibited from rotating. A union nut (shown in figures 4 and 5) coupled to the threaded portion of the coupling portion 2c can thus be unscrewed with less difficulty since the first tubular element 4 with the threaded portion will essentially be kept in place by the second tubular element 5.

In the case of assembling the union nut onto the fitting, the engagement portion 4 and the receiving portion 5 are configured to interact in a different manner. As shown in figure 1, the engaging sidewalls of the engagement portion 4 and the receiving portion 5 are not substantially perpendicular to the direction of rotation when the first tubular element 2 is rotated in a clockwise direction. The engaging surfaces are curved such that torque provided from the engagement portion 4 to the receiving portion 5 will urge the deformable section 6 not only in the direction of rotation, but also in a radial direction as well. The deformable section 6 is configured to allow deflection in a radial deflection, but only when a certain amount of torque is transferred to it. Below this required maximum torque threshold, the force is not sufficient to deflect the deformable section 6. The result will be that the first tubular element 2 is inhibited from rotating in the clockwise direction. This is useful in that before the union nut has been fully tightened, the threaded portion of the fitting 1 should be held in place to facilitate this process. When the union nut has been fully threaded on, the torque applied to the union nut will be fully transferred to the first tubular element 2 via the coupling section 2c. When this torque applied to the engagement portion 4 is transferred to the receiving portion 5 and exceeds the maximum torque threshold, the deformable section 6 will then start to deflect in a radial direction. As the deformable section 6 is deflected, the engagement portion 4 will move in the clockwise direction to continue deflecting the deformable section 6, resulting in relative movement of the first tubular element 2 with the second tubular element 3.

One manner in which to ensure the proper transfer of torque from the union nut to the first tubular element 2 is to provide corresponding form lock elements in both the union nut and the first tubular element 2. These form lock elements should be configured such that the function of the sealing is ensured before the correspond form lock elements engage. One way to check if the sealing is made, is to only allow the form lock elements to engage when the union nut is in a certain axial position. This would indicate how much the union nut has been threaded into the first tubular element 2. Once engaged, the first tubular element 2 should be actuated to move along with the union nut. Consequently, a more reliable manner for rotating the first tubular element 2 after full assembly of the union nut and the appropriate transfer of torque from the union nut to the first tubular element 2, regardless of the friction values between the sealing and tubular elements which may otherwise affect the transfer of torque.

In this embodiment, once the engagement portion 4 disengages with the receiving portion 5, after it rotates over a deformable section 6, the engagement portion 4 becomes positioned in the gap portion between neighbouring deformable sections 6. Moreover, the deformable section 6 must return to the original position in order to once again provide engagement between the engagement portion 4 and the receiving portion 5. To provide such a function, the deformable section 6 in the present invention is constructed to have an elastic return force in the direction opposite to the direction of deflection of the deformable section 6. The direction of the elastic return force being opposite to the direction of deflection provides an efficient means for ensuring a good engagement between the engagement portion 4 and the receiving portion 5 and that the second tubular element 3 may continue to be used as a torque limiter. Additionally, the maximum torque threshold set by the deformable section 6 can be effectively controlled and predicted. In this embodiment, the material and the form of the deformable section 6 and the second tubular element 3 provides for this elastic return force. In other embodiments, this force may be provide for by other means such as a spring-loaded mechanism or other biasing means.

Once the engagement portion 4 is positioned in the gap portion, the engagement portion 4 must be positioned into the following receiving portion 5 in order to continue to function as a torque limiter. To this end, the engagement portion 4 and the outer edge of the deformable section 6 must be configured to allow the engagement portion 4 to move into contact with the receiving portion 5 of said deformable section 6 when the first tubular element 2 is rotated in the clockwise direction. This may be achieved by another deflection of the deformable section 6. The amount of torque applied need not be the same or similar to the maximum torque threshold for deflecting the deformable section 6 when the engagement portion 4 and the receiving portion 5 are engaged. Alternatively, in another embodiment where the gap portion does not have a second end, the engagement portion may move directly into an adjacent receiving portion.

While reference has been made to the maximum torque threshold being applicable to the clockwise direction, and strictly prohibiting movement/rotation in the counter-clockwise direction, the invention is understood to be applicable the other way around if desired.

A fitting according to this invention thus features a torque limiting function from the configuration of the first tubular element 2 and the second tubular element 3. Substantially no relative rotation is allowed in one direction of rotation whereas relative rotation is permitted in the other direction of rotation only if the torque applied to the tubular elements 2 and 3 exceed a maximum torque threshold. This maximum torque threshold depends upon the configuration of the fitting, such as the properties of the engagement portion 4, receiving portion 5, and the deformable section 6, particularly the elastic return force of the deformable section 6. Some properties of these components which affect the maximum torque threshold include: the geometry and/or the material of the engagement portion, the geometry and/or material of the receiving portion, particularly the angle, position and the height of the engagement portion and/or the receiving portion, the number of receiving portions and engagement portions, the stiffness, material and/or geometry of the deformable section, the distance between respective first and second edges of neighbouring deformable sections, the number of deformable sections, the ratio between said distance and said geometry of the deformable sections, and combinations thereof.

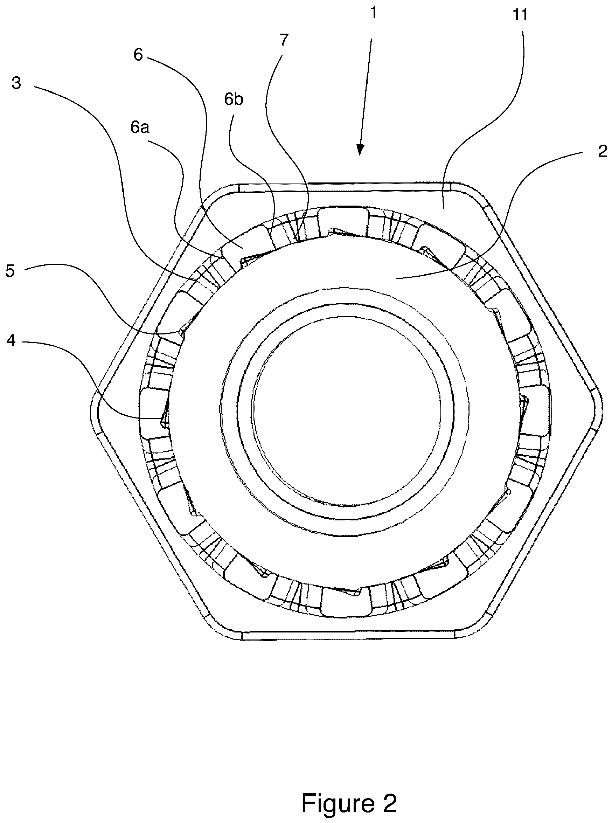

Figure 2 depicts a front view of a fitting 1 according to the present invention from the first end 2a. The shape of the engagement portion 4 and the receiving portions 5 as described above is seen more clearly. The engagement portions 4 are arranged circumferentially and uniformly about the first tubular element 2. Corresponding receiving portions 5 are arranged on respective deformable sections 6 which are also arranged uniformly on the second tubular element 3. While this embodiment shows uniform distribution of the engagement portions 4 and the receiving portions 5, the present invention also includes non-uniform distributions. Only at least a partial correspondence of the arrangement is necessary so that the engagement and receiving portions 4, 5 can be engaged and disengaged.

Additionally, in this embodiment the distance between neighbouring deformable sections 6 is sufficiently wide to allow the engagement portions 4 to be positioned therein, when the first tubular element 2 is rotated such that the engagement portion 4 deflects the deformable section 6 and rotates out of a receiving portion 5 which it was previously engaged with. The connecting section 7 connecting the facing edges of neighbouring deformable sections 6 is shown where these gap portions are located. The mounting structure 11 in the shape of a hexagon is also shown.

Referring to the shape of the engagement portions 4 and the receiving portion 5, the engaging edges of these portions in the counter-clockwise direction are substantially in line with the radial direction such that roughly only a force in the direction of rotation is effectively provided during rotation in the counter-clockwise direction. The deformable section 6 substantially does not deflect in the radial direction no matter the amount of torque applied. The torque from rotation of the first tubular element 2 is thus substantially completely transferred to the second tubular element 3, and these elements do not rotate relatively. In the clockwise direction, the curve of the edges has a larger component in the circumferential direction. Weaker torque levels will not be sufficient to overcome the bias of the deformable section 7 to stay at the neutral position and as such will still be substantially completely transferred to the second tubular element 3. Once sufficient torque is provided, the force applied by the engagement portion 4 to the receiving portion 5 will not be transferred completely, and the deformable section 6 is caused to deflect in the radial direction. Deflection of the deformable section 6 in turn provides room for the engagement portion 4 and the first tubular element 2 to rotate. In this manner, the torque is limited in the clockwise direction.

The torque limiting fitting as described is thus appropriate to be used with plastic material, whereby excessive force acting on the fitting during assembly can be controlled and damage prevented while still warranting for simple but correct assembly.

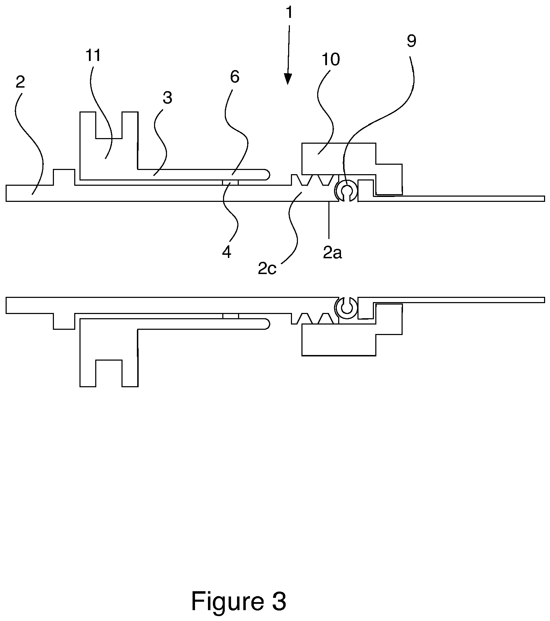

Figure 3 is a cross-section of the side view of the fitting 1 according to the present invention. In this figure, the fitting 1 is shown coupled to a first conducting member via the coupling element 10. The second tubular element 3 is connected about the first tubular element 2. Protruded portions of the second tubular element 3 are shown on the top and bottom of the fitting representing the mounting structure for fixing the second tubular element relative to a stationary component (such as an external housing, not shown). This structure when fixed prevents movement of the second tubular 3, even during rotation of the first tubular element 2 resulting in relative rotation of the first tubular element 2 and the second tubular element 3.

Additionally, a coupling element 10 in the form of a nut is fastened about the coupling portion 2c of the first tubular element 2. In the present invention, instead of a flat gasket to seal the connecting between the fitting 1 and the conducting member, a C-seal 9 is used to provide the sealing. A C-seal 9 does not require as much axial compression force to provide a secure sealing in comparison with a flat gasket. Additionally, the opening of the C-seal faces the interior of the fitting/conducting member allowing the medium to flow into the C-seal. The C-seal consequently expands providing increased pressure and contact against the receptacle containing the C-seal formed by the first end 2a of the tubular element 2 and the connecting end of the conducting member. These characteristics of the C-seal 9 allows it to be an effective sealing means without requiring a high axial compression force. Accordingly, a C-seal is appropriate to be used with a fitting made of plastic, which may be damaged if used together with a flat gasket due to the high axial compression force required for appropriate sealing.

Figure 4 depicts an external view of an embodiment of the fitting of the present invention coupled to a union nut 10. In particular, the union nut 10 is coupled to the fitting 1 by means of a latch hook mechanism. In this embodiment, the union nut comprises a hook portion 10a. In the locked position the hook portion 10a links with a stopper recess 2a' (shown in figure 5) of the coupling portion 2c. When the hook portion 10a is linked with a stopper recess 2a', one direction of rotation is inhibited whereas the other direction of rotation is permitted, typically the direction for releasing and securing the union nut 10, respectively. The union nut can thus be secured as normal but prevented from unintentionally being released, as well as being unloosened overtime. When the user desires to loosen the nut 10, the hook portion 10a must be actuated by the outwards projecting latch. The hook portion 10a will then be lifted from contact with the stopper recess 2a and allowing rotation of the nut 10 in the releasing direction as well as the securing direction.

Figure 5 illustrates the embodiment of figure 4, with a cut-view at a portion of the connection between the union nut 10 and the coupling portion 2c. In this figure, the stopper recesses 2a' can be clearly seen. The stopper recesses 2a' are shaped to be wedges with the angled edge slanting upwards in the clockwise direction ending with a substantially perpendicular edge to the direction of rotation. As shown, when the hook portion 10a is in a neutral position, a contacting section rests in a stopper recess 2a'. Attempted counter-clockwise rotation of the nut 10 causes the hook portion 10a to be pressed against the substantially perpendicular edge, preventing the rotation. In the clockwise direction, the hook portion 10a travels along the slanted edge from one stopper recess 2a' to the next, enabling rotation of the nut 10. It is understood that actuating the latch of the hook portion 10a lifts the contacting portion of the hook portion 10a away from the stop recess 2a, removing the inhibiting effect of this latch hook mechanism.

In the figure shown, only a section of the coupling portion 2c is provided with the stopper recesses 2a'. However, the present invention is not limited in this manner and the coupling portion 2c may have more or less stopper recesses 2c arranged thereon. Additionally, the shape of the recesses 2a' and the hook portion 10a is not required to have the specific form shown, as long as the direction for release is inhibited (unless actuated) while the direction for assembly is allowed.

It is also understood that the hook/recess could also be provided on the respective other component, i.e., the stopper recesses on the coupling element and a hook/latch portion on the first tubular element.

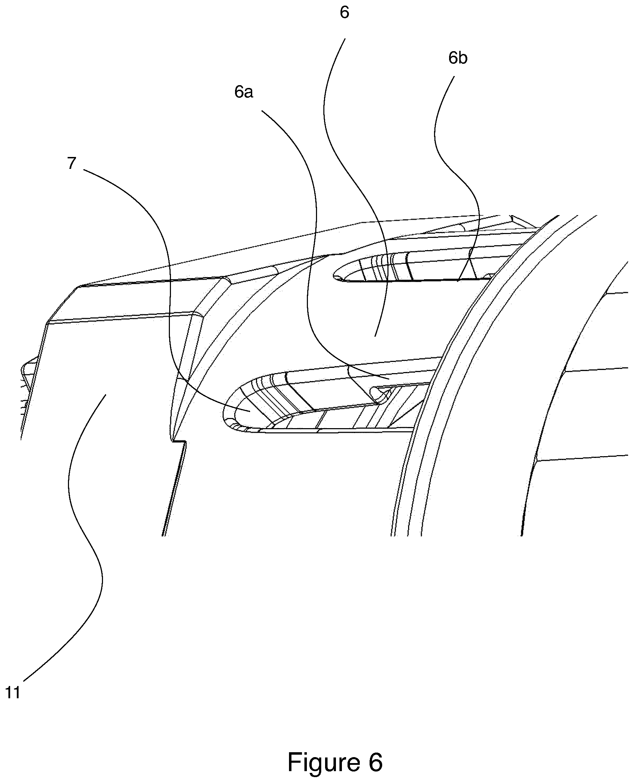

Figure 6 is a zoomed-in view of a connecting section 7 of the present invention. The connecting section 7 connects a first edge of a deformable section 6 with a second edge of a neighbouring deformable section 6 facing the first edge, as shown in this figure. The connecting parts of the connecting section 7 to each respective edge will be referred to as a transition portion. The connecting section 7 essentially has a curved shape comprising two transition portions connecting to the respective first and second edges. Since the curve of the connecting section 7 is symmetrical in this embodiment, the transition portions in this embodiment are identical but flipped about the axial midline of the connecting section 7. Non-symmetrical transition portions of a connecting section 7 are also possible depending upon the desired characteristics of the neighbouring deformable sections 6.

As can be seen in figure 6, a transition portion of the connecting section 7 comprises a plurality of portions, shown by the delineating lines running in the thickness direction of the connecting section 7. A feature of the present invention relates to the type of curve used by the connecting section 7. Specifically, each transition portion forming the curve has a bionic shape. The term bionic shape refers to a type of shaped derived from bionic research results and found to be structurally advantageous. In the bionic shape used in an embodiment of the present invention, the bionic shape relates to the form that roots of a tree take during growth. This bionic shape is applied to the specific arrangement of the plurality of parts making up a transition portion.

A geometric algorithm defining the bionic shape is based on the work of a Claus Mattheck, the work of which forms the basis of the paper "Simpliefied Shape Optimisation Technique For The Design of Notched Machine Parts" [sic] by Woyand et al, ISBN 978-9985-59-840-5, page 376-381. In the aforementioned paper, the design is applied to notched machine parts such as a tension rod and a connecting rod. Advantages seen from using a bionic shape is the reduction of mechanical stress. Providing a connecting section 7 having transition portions of this bionic shape were also found to reduce the mechanical stress from the deflection of the adjacent deformable sections 6, in comparison with a curve with a constant radius or transition portions which are substantially angular. The deformable sections 6 are more durable, and in the case of using a plastic, less prone to stress whitening which occurs when stress applied to a plastic material causes the colour to become white and signalling onset of failure of the material. It was also found that such a shape required less material to construct than another shape having similar stress tolerance properties.

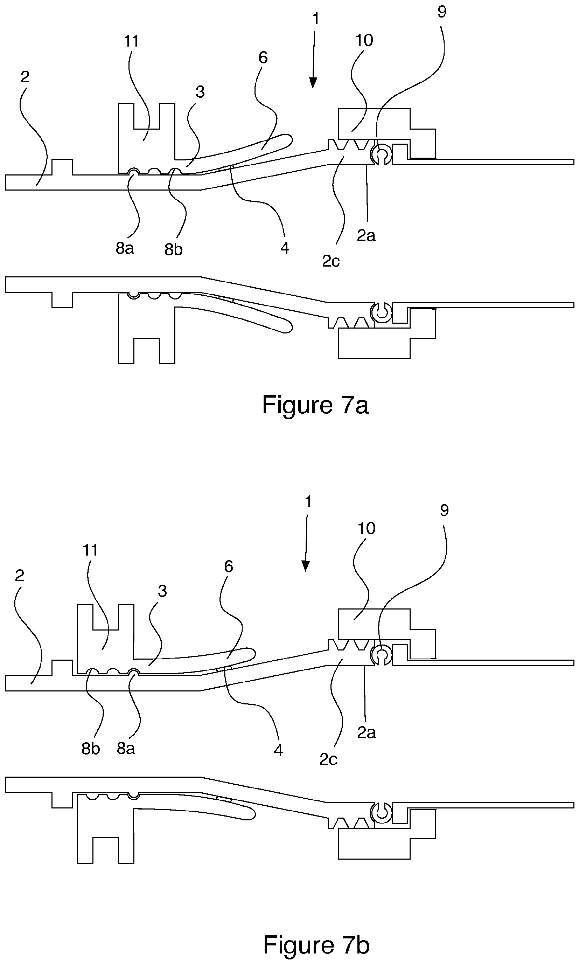

Figures 7a and 7b illustrate another embodiment of the present invention. In this exemplary embodiment, the first tubular element 2 and the second tubular element 3 are configured to be axially displaceable with respect to each other. In combination with this capability, the first tubular element 2 is formed to comprise an outward conical section, with respect to the direction of the first end 2a. The axial displacement of these two tubular elements 2, 3 thus affects the elastic return force of the deformable section 6 as a result of the changing diameter of the conical section. The maximum torque threshold can be altered accordingly.

Figure 7a depicts a cross-sectional side view of the fitting 1 according to the second embodiment, where the second tubular element 3 is in a first position with respect to the first tubular element 2. In this configuration, the relative axial position of the first tubular element 2 and the second tubular element 3 is set by interlocking means 8a and 8b. A first interlocking means 8a is provided on a first surface of the first tubular element 2. In this example, the first interlocking means 8a is a semi-circular projection stop. However, it may take other forms in other embodiments. A plurality of second interlocking means 8b is provided on the second surface of the second tubular element 3 facing the first surface. The shape of the plurality of second interlocking means 8b is corresponding to the shape of the first interlocking means 8a such that an engagement is formed, keeping the first tubular element 2 and the second tubular element 3 in a given relative axial position. In this case, the term corresponding does not mean that shapes are matching, only to the extent that they may fix the first tubular element 2 and the second tubular element at a specific axial position.

In figure 7a, the first interlocking means 8a is engaging with the second interlocking means 8b most distal from the deformable section 6. As a result, the second tubular element 3 is situated in a position closest to the first end portion 2a of the first tubular element 2 (amongst the possible axial positions defined by the second interlocking means 8b).

As mentioned above, the first tubular element 2 has a conical section expanding outwards to the first end portion 2a. The conical section is at least partially overlapping with the deformable section 6. The expanding diameter urges the deformable section 6 to deflect in a radial direction and creates a bias to the elastic return force of the deformable section 6. Accordingly, a predefined radial deflection offset can be added against the natural elastic return force of the deformable section 6. In the present example, this is accomplished via the form of the first tubular element 2. However, the present invention is not limited in this manner. For example, an external element provided on the first surface of the first tubular element 2 or the orientation of the deformable section 6 itself may be adjusted to provide a similar radial deflection offset. The maximum torque threshold in this first relative axial position of the first tubular element 2 and the second tubular element 3 is relatively high in comparison with threshold set in the second relative axial position.

Figure 7b depicts a cross-sectional side view of the fitting 1 according to the second embodiment, where the second tubular element 3 is in a second position with respect to the first tubular element 2. In this second relative axial position, the first interlocking means 8a is engaging with the second interlocking means 8b most proximal to the deformable section 6. As a result, the second tubular element 3 is situated in a position furthest from the first end portion 2a of the first tubular element 2 (amongst the possible axial positions defined by the second interlocking means 8b).

In relation to the conical section of the first tubular element 2, the predefined radial deflection offset of the second relative axial position is lower in comparison with the first relative axial position as shown in figure 7a. A lesser region of the deformable section 6 overlaps with the conical section of the first tubular element 2, and the angle imposed on the deformable section 6 is not a steep relative to the configuration of figure 7a. The bias to the elastic return force is decreased in the second relative axial position. Thus, the maximum torque threshold in this second relative axial position of the first tubular element 2 and the second tubular element 3 is relatively low in comparison with threshold set in the first relative axial position.

Furthermore, when comparing the first and second relative axial positions shown in figures 7a and 7b, it is shown that the engagement portion 4 engages with a different area of the receiving portion (not shown in figures 7a and 7b) along the deformable section 7. The point of contact and the geometry and/or materials of these portions may also affect maximum torque threshold.

Although the first interlocking means 8a and the second interlocking means 8b are shown provided on the first tubular element 2 and the second tubular element 3, respectively, the arrangement could be the other way around.

Additionally, the axial displacement of the first tubular element 2 and the second tubular element 3 may be set in a variety of ways. For example. The second tubular element 3 may be shifted from the first relative axial position to the second relative axial position by sliding the second tubular element 3 along the first tubular element 2. In this case, the first interlocking means 8a and the second interlocking means 8b must be configured to allow this movement, but on the other hand prevent this movement from happening too easily during rotation and otherwise. For example, a certain axial force threshold could be set to control when the axial displacement via sliding may occur. In another possibility, the first interlocking means 8a may be retracted via an actuator to allow the second tubular element 3 to slide from the first relative axial position to a second relative axial position. Thereafter, the first interlocking means 8a may be actuated to return to the fixed position. In yet another possibility, the second tubular element 3 may be configured to extend in a radial direction in other to create space for it to be axially displaced with respect to the first tubular element 2.

Alternatively, the second tubular element 3 may be detached from the first tubular element 2 completely from a first relative axial position and then reattached at a second relative axial position. In this case, there is no requirement for the first interlocking means 8a and the second interlocking means 8b to allow for any axial movement. However, the second tubular element 3 would require a mechanism to allow for the element to be detached and reattached accordingly, for example, a hinge and a latch mechanism. Other mechanisms are possible, such as a combination of the above.

The above features have been described with respect to exemplary embodiments as shown in figures 1 to 7b. However, the features are not limited to within the embodiments they have been described with. The features of one embodiment may be implemented with the other described embodiments in an appropriate manner.

## Claims

1. A torque limiting fitting (1) comprising:
a first tubular element (2) having a first end (2a) for receiving a first conducting member and a second end (2b) for receiving a second conducting member, the first end including a coupling portion (2c) for engaging with a coupling element (10);
a second tubular element (3) coupled to and rotatable relative to the first tubular element (2);
at least one engagement portion (4) having a first shape, and at least one receiving portion (5) having a second shape, the first shape arranged to allow transmission of torque to the second shape in at least one direction, and
wherein one of the engagement portion (4) and the receiving portion (5) is arranged at a first surface of the first tubular element (2) and the respective other one (5; 4) is arranged at a second surface of the second tubular element (3),
at least one deformable section (6) is provided on the first or second tubular element (2; 3), the deformable section extending along an axial length of at least a part of the first or second tubular element (2; 3), respectively, and having a first edge (6a) and a second edge (6b), the deformable section having the engagement portion or the receiving portion (4; 5) arranged thereon and being able to deflect radially during relative rotational movement of the first and second tubular element (2, 3), wherein such radial deflection is against an elastic return force of the deformable section (6),
the engagement portion (4) and the receiving portion (5) are configured to engage in a first direction of rotation of the first tubular element (2) relative to the second tubular element (3), wherein a first torque applied to the first tubular element or the second tubular element (2; 3) having the engagement portion arranged thereto is transferred to the respective other one of the second tubular element and the first tubular element (3; 2) such that there is substantially no relative rotational movement between the first tubular element and the second tubular element (2, 3), and the deformable section (6) substantially does not deflect radially, and
the engagement portion (4) and the receiving portion (5) are configured to engage in a second direction of rotation of the first tubular element (2) relative to the second tubular element (3), wherein a second torque applied to the first tubular element or the second tubular element (2; 3) having the engagement portion (6) arranged thereto is transferred to the respective other one of the second tubular element and the first tubular element (3; 2) such that:
(a) there is substantially no relative rotational movement between the first tubular element and the second tubular element (2, 3), and the deformable section (6) substantially does not deflect radially, when the second torque is below or equal to a maximum torque threshold, and
(b) there is relative rotational movement between the first tubular element and the second tubular element (2, 3), and the deformable section (6) deflects radially when the second torque exceeds the maximum torque threshold
**characterized in that**
the fitting is constructed of plastic, and
the second tubular element (3) is coupled to the first tubular element (2) by being arranged substantially coaxially about the outer surface of the first tubular element, and wherein the second tubular element (3) comprises a mounting structure (11) by which it is fixable relative to a stationary component for preventing rotation of the second tubular element (3).

2. The torque limiting fitting according to claim 1 having a plurality of deformable sections (6), wherein each of the plurality of deformable sections are arranged substantially uniformly or non-uniformly about the circumference of the first or second tubular element (2; 3), each of the deformable sections having at least one of an engagement portion (4) or a receiving portion (5) arranged thereon, and a plurality of engagement portions (4) or a plurality of receiving portions (5) are arranged on the respective other second or first tubular element (3; 2) in a manner at least partially corresponding to the arrangement of the at least one engagement portion or the receiving portion (4; 5) arranged on the deformable section.

3. The torque limiting fitting according to any of the preceding claims, wherein the first or the second tubular element (2; 3) having the deformable section (6) arranged thereon further comprises a connecting section (7) for connecting respective first and second edges (6a, 6b) of two neighbouring deformable sections (6), and, optionally, wherein the connecting section (7) has a curved shape which comprises two transition portions connecting said first and second edges (6a, 6b), each transition portion having a bionic shape.

4. The torque limiting fitting according to any of the preceding claims, wherein the first or the second tubular element (2; 3) not having the deformable section (6) arranged thereon comprises a conical section which overlaps at least a part of the deformable section (6).

5. The torque limiting fitting according to any of the preceding above claims, wherein the first tubular element (2) is axially displaceable relative to the second tubular element (3).

6. The torque limiting fitting according to claim 5, wherein the axial displacement of the first tubular element (2) relative to the second tubular element (3) increases or decreases a bias to the elastic return force, in particular, by addition of a predefined radial deflection offset.

7. The torque limiting fitting according to claim 5, wherein the first tubular element or the second tubular element (2; 3) has a plurality of second interlocking means (8b) arranged along the axial length thereof, each of the plurality of second interlocking means (8b) positioned at a predetermined axial position, and the respective other tubular element (3; 2) having a first interlocking means (8a) for interlocking with at least one of the plurality of the second interlocking means (8b) to define the axial position of the first tubular element (2) relative to the second tubular element (3),

8. The torque limiting fitting according to any of the preceding claims, wherein the elastic return force and/or the maximum force threshold is defined by: the geometry and/or the material of the engagement portion (4), the geometry and/or material of the receiving portion (5), particularly the angle, position and the height of the engagement portion and/or the receiving portion, the number of receiving portions and engagement portions, the stiffness, material and/or geometry of the deformable section (6), the distance between respective first and second edges of neighbouring deformable sections, the number of deformable sections, the ratio between said distance and said geometry of the deformable sections, and combinations thereof.

9. The torque limiting fitting according to any of the preceding claims, wherein the first tubular element (2) and the second tubular element (3) are assembled by snap fastening or produced by 2-component injection moulding, in particular assembly injection moulding.

10. The torque limiting fitting according to any of the preceding claims, wherein the coupling portion (2c) comprises a threaded portion and the coupling element (10) comprises a union nut,

11. The torque limiting fitting according to claim 10, wherein the coupling portion further comprises a plurality of stopper recesses (2a') to allow inhibiting rotation of the coupling element (10) in at least one direction of rotation.

## Patentansprüche

1. Drehmomentbegrenzendes Anschlussstück (1), das aufweist:
ein erstes röhrenförmiges Element (2) mit einem ersten Ende (2a) zum Aufnehmen eines ersten leitenden Glieds und einem zweiten Ende (2b) zum Aufnehmen eines zweiten leitenden Glieds, wobei das erste Ende einen Kopplungsabschnitt (2c) zum Zusammengreifen mit einem Kopplungselement (10) aufweist;
ein zweites röhrenförmiges Element (3), das an das erste röhrenförmige Element (2) gekoppelt und relativ dazu drehbar ist;
mindestens einen Eingriffsabschnitt (4) mit einer ersten Form und mindestens einen Aufnahmeabschnitt (5) mit einer zweiten Form, wobei die erste Form dazu eingerichtet ist, eine Übertragung eines Drehmoments auf die zweite Form in mindestens einer Richtungzuzulassen, und
wobei von dem Eingriffsabschnitt (4) und dem Aufnahmeabschnitt (5) einer an einer ersten Oberfläche des ersten röhrenförmigen Elements (2) angeordnet ist und der jeweils andere (5; 4) an einer zweiten Oberfläche des zweiten röhrenförmigen Elements (3) angeordnet ist,
mindestens ein verformbares Teilstück (6) auf dem ersten oder zweiten röhrenförmigen Element (2; 3) vorgesehen ist, wobei das verformbare Teilstück sich entlang einer axialen Länge mindestens eines Teils des ersten beziehungsweise zweiten röhrenförmigen Elements (2; 3) erstreckt und eine erste Kante (6a) und eine zweite Kante (6b) hat, wobei das verformbare Teilstück darauf angeordnet den Eingriffsabschnitt oder den Aufnahmeabschnitt (4; 5) aufweist und fähig ist, sich während einer relativen Drehbewegung des ersten und zweiten röhrenförmigen Elements (2, 3) radial auszulenken, wobei diese radiale Auslenkung gegen eine elastische Rückstellkraft des verformbaren Teilstücks (6) erfolgt,
der Eingriffsabschnitt (4) und der Aufnahmeabschnitt (5) dazu ausgebildet sind, in einer ersten Drehrichtung des ersten röhrenförmigen Elements (2) relativ zu dem zweiten röhrenförmigen Element (3) zusammenzugreifen, wobei ein erstes Drehmoment, das auf das erste röhrenförmige Element oder das zweite röhrenförmige Element (2; 3) mit dem daran angeordneten Eingriffsabschnitt angewandt ist, so auf das jeweils andere von dem zweiten röhrenförmigen Element und dem ersten röhrenförmigen Element (3; 2) übertragen ist, dass im Wesentlichen keine relative Drehbewegung zwischen dem ersten röhrenförmigen Element und dem zweiten röhrenförmigen Element (2, 3) erfolgt und das verformbare Teilstück (6) sich im Wesentlichen nicht radial auslenkt, und
der Eingriffsabschnitt (4) und der Aufnahmeabschnitt (5) dazu ausgebildet sind, in einer zweiten Drehrichtung des ersten röhrenförmigen Elements (2) relativ zu dem zweiten röhrenförmigen Element (3) zusammenzugreifen, wobei ein zweites Drehmoment, das auf das erste röhrenförmige Element oder das zweite röhrenförmige Element (2; 3) mit dem daran angeordneten Eingriffsabschnitt (6) angewandt ist, so auf das jeweils andere von dem zweiten röhrenförmigen Element und dem ersten röhrenförmigen Element (3; 2) übertragen ist, dass:
(a) im Wesentlichen keine relative Drehbewegung zwischen dem ersten röhrenförmigen Element und dem zweiten röhrenförmigen Element (2, 3) erfolgt und das verformbare Teilstück (6) sich im Wesentlichen nicht radial auslenkt, wenn das zweite Drehmoment unter oder gleich einer maximalen Drehmomentschwelle ist, und
(b) eine relative Drehbewegung zwischen dem ersten röhrenförmigen Element und dem zweiten röhrenförmigen Element (2, 3) erfolgt und das verformbare Teilstück (6) sich radial auslenkt, wenn das zweite Drehmoment die maximale Drehmomentschwelle überschreitet,
**dadurch gekennzeichnet, dass**
das Anschlussstück aus Kunststoff gebildet ist und
das zweite röhrenförmige Element (3) an das erste röhrenförmige Element (2) gekoppelt ist, indem es im Wesentlichen koaxial um die äußere Oberfläche des ersten röhrenförmigen Elements angeordnet ist, und wobei das zweite röhrenförmige Element (3) eine Anbringungsstruktur (11) aufweist, mit der es relativ zu einer unbewegten Komponente zum Verhindern einer Drehung des zweiten röhrenförmigen Elements (3) fixierbar ist.

2. Drehmomentbegrenzendes Anschlussstück gemäß Anspruch 1, das eine Vielzahl verformbarer Teilstücke (6) hat, wobei die Vielzahl verformbarer Teilstücke jeweils im Wesentlichen gleichmäßig oder ungleichmäßig um den Umfang des ersten oder zweiten röhrenförmigen Elements (2; 3) angeordnet ist, wobei jedes der verformbaren Teilstücke darauf angeordnet mindestens entweder einen Eingriffsabschnitt (4) oder einen Aufnahmeabschnitt (5) aufweist und eine Vielzahl von Eingriffsabschnitten (4) oder eine Vielzahl von Aufnahmeabschnitten (5) auf dem jeweils anderen zweiten oder ersten röhrenförmigen Element (3; 2) auf eine Weise angeordnet ist, die mindestens teilweise der Anordnung des mindestens einen Eingriffsabschnitts oder des Aufnahmeabschnitts (4; 5), der auf dem verformbaren Teilstück angeordnet ist, entspricht.

3. Drehmomentbegrenzendes Anschlussstück gemäß einem der vorangehenden Ansprüche, bei dem das erste oder das zweite röhrenförmige Element (2; 3) mit dem darauf angeordneten verformbaren Teilstück (6) ferner einen Verbindungsabschnitt (7) zum Verbinden jeweiliger erster und zweiter Kanten (6a, 6b) von zwei benachbarten verformbaren Teilstücken (6) aufweist, und wobei wahlweise derVerbindungsabschnitt (7) eine gekrümmte Form hat, die zwei Übergangsabschnitte aufweist, welche die erste und die zweite Kante (6a, 6b) verbinden, wobei jeder Übergangsabschnitt eine bionische Form hat.

4. Drehmomentbegrenzendes Anschlussstück gemäß einem der vorangehenden Ansprüche, bei dem das erste oder das zweite röhrenförmige Element (2; 3), das nicht das darauf angeordnete verformbare Teilstück (6) aufweist, ein konisches Teilstück aufweist, das mindestens einen Teil des verformbaren Teilstücks (6) überlappt.

5. Drehmomentbegrenzendes Anschlussstück gemäß einem der vorangehenden obigen Ansprüche, bei dem das erste röhrenförmige Element (2) relativ zu dem zweiten röhrenförmigen Element (3) axial verschiebbar ist.

6. Drehmomentbegrenzendes Anschlussstück gemäß Anspruch 5, bei dem die axiale Verschiebung des ersten röhrenförmigen Elements (2) relativ zu dem zweiten röhrenförmigen Element (3), insbesondere durch das Hinzufügen eines vordefinierten radialen Auslenkungsversatzes, eine Vorspannung zu der elastischen Rückstellkraft erhöht oder verringert.

7. Drehmomentbegrenzendes Anschlussstück gemäß Anspruch 5, bei dem das erste röhrenförmige Element oder das zweite röhrenförmige Element (2; 3) eine Vielzahl zweiter Verzahnungsmittel (8b) hat, die entlang der axialen Länge desselben angeordnet sind, wobei jedes von der Vielzahl zweiter Verzahnungsmittel (8b) an einer vorbestimmten axialen Position positioniert ist, und das jeweils andere röhrenförmige Element (3; 2) ein erstes Verzahnungsmittel (8a) zur Verzahnung mit mindestens einem von der der Vielzahl der zweiten Verzahnungsmittel (8b) hat, um die axiale Position des ersten röhrenförmigen Elements (2) relativ zu dem zweiten röhrenförmigen Element (3) zu definieren.

8. Drehmomentbegrenzendes Anschlussstück gemäß einem der vorangehenden Ansprüche, wobei die elastische Rückstellkraft und/oder die maximale Kraftschwelle definiert ist durch: die Geometrie und/oder das Material des Eingriffsabschnitts (4), die Geometrie und/oder das Material des Aufnahmeabschnitts (5), insbesondere den Winkel, die Position und die Höhe des Eingriffsabschnitts und/oder des Aufnahmeabschnitts, die Zahl der Aufnahmeabschnitte und Eingriffsabschnitte, die Steifigkeit, das Material und/oder die Geometrie des verformbaren Teilstücks (6), die Distanz zwischen jeweiligen ersten und zweiten Kanten benachbarter verformbarer Teilstücke, die Zahl der verformbaren Teilstücke, das Verhältnis zwischen der Distanz und der Geometrie der verformbaren Teilstücke sowie Kombinationen daraus.

9. Drehmomentbegrenzendes Anschlussstück gemäß einem der vorangehenden Ansprüche, bei dem das erste röhrenförmige Element (2) und das zweite röhrenförmige Element (3) durch Einrastbefestigung montiert oder durch Zwei-Komponenten-Spritzguss, insbesondere Montagespritzguss, hergestellt sind.

10. Drehmomentbegrenzendes Anschlussstück gemäß einem der vorangehenden Ansprüche, bei dem der Kopplungsabschnitt (2c) einen Gewindeabschnitt aufweist und das Kopplungselement (10) eine Muffe aufweist.

11. Drehmomentbegrenzendes Anschlussstück gemäß Anspruch 10, bei dem der Kopplungsabschnittferner eine Vielzahl von Anschlagaussparungen (2a') aufweist, um eine Hemmung einer Drehung des Kopplungselements (10) in mindestens einer Drehrichtung zuzulassen.

## Revendications

1. Raccord limiteur de couple (1) comprenant :
un premier élément tubulaire (2) possédant une première extrémité (2a) en vue de la réception d'un premier élément conducteur et une seconde extrémité (2b) en vue de la réception d'un second élément conducteur, la première extrémité comportant une partie de couplage (2c) en vue de la prise avec un élément de couplage (10) ;
un second élément tubulaire (3) couplé et rotatif par rapport au premier élément tubulaire (2) ;
au moins une partie de prise (4) possédant une première forme, et au moins une partie réceptrice (5) possédant une seconde forme, la première forme étant agencée afin de permettre la transmission de couple à la seconde forme dans au moins une direction, et
dans lequel une de la partie de prise (4) et de la partie réceptrice (5) est agencée sur une première surface du premier élément tubulaire (2) et l'autre respective (5 ; 4) est agencée sur une seconde surface du second élément tubulaire (3),
au moins une section déformable (6) est livrée sur le premier ou le second élément tubulaire (2 ; 3), la section déformable s'étendant respectivement le long d'une longueur axiale d'au moins une partie du premier ou du second élément tubulaire (2 ; 3), et possédant un premier bord (6a) et un second bord (6b), la section déformable possédant la partie de prise ou la partie réceptrice (4 ; 5) agencée dessus et étant apte à dévier radialement pendant le mouvement rotatif relatif du premier et du second élément tubulaire (2, 3), dans lequel une telle déviation radiale est contre une force de retour élastique de la section déformable (6),
la partie de prise (4) et la partie réceptrice (5) sont configurées pour prendre dans une première direction de rotation du premier élément tubulaire (2) par rapport au second élément tubulaire (3), dans lequel un premier couple appliqué au premier élément tubulaire ou au second élément tubulaire (2 ; 3) possédant la partie de prise agencée dessus est transféré vers l'autre respectif du second élément tubulaire et du premier élément tubulaire (3 ; 2) de sorte qu'il n'y a pas de mouvement rotatif respectif de manière substantielle entre le premier élément tubulaire et le second élément tubulaire (2,3), et la section déformable (6) ne dévie pas radialement de manière substantielle, et
la partie de prise (4) et la partie réceptrice (5) sont configurées pour prendre dans une seconde direction de rotation du premier élément tubulaire (2) par rapport au second élément tubulaire (3), dans lequel un second couple appliqué au premier élément tubulaire ou au second élément tubulaire (2 ; 3) possédant la partie de prise (6) agencée dessus est transféré vers l'autre respectif du second élément tubulaire et du premier élément tubulaire (3 ; 2) de sorte que :
(a) il n'y a pas de mouvement rotatif respectif de manière substantielle entre le premier élément tubulaire et le second élément tubulaire (2, 3), et la section déformable (6) ne dévie pas radialement de manière substantielle, lorsque le second couple est inférieur ou égal à un seuil de couple maximum, et
(b) il n'y a pas de mouvement rotatif respectif entre le premier élément tubulaire et le second élément tubulaire (2, 3), et la section déformable (6) dévie radialement lorsque le second couple dépasse le seuil de couple maximum,
**caractérisé en ce que**
le raccord est construit en plastique, et
le second élément tubulaire (3) est couplé au premier élément tubulaire (2) en étant agencé substantiellement de manière coaxiale autour de la surface externe du premier élément tubulaire, et dans lequel le second élément tubulaire (3) comprend une structure de montage (11) par laquelle il est fixable par rapport à un composant stationnaire afin d'empêcher la rotation du second élément tubulaire (3).

2. Raccord limiteur de couple selon la revendication 1, possédant une pluralité de sections déformables (6), dans lequel chacune de la pluralité de sections déformables est agencée de manière substantielle uniformément ou non uniformément autour de la circonférence du premier ou du second élément tubulaire (2 ; 3), chacune des sections déformables possédant au moins l'une d'une partie de prise (4) ou d'une partie réceptrice (5) agencée dessus, et une pluralité de parties de prise (4) ou une pluralité de parties réceptrices (5) sont agencées sur l'autre second ou premier élément tubulaire (3 ; 2) respectif d'une manière correspondant au moins partiellement à l'agencement d'au moins l'une de la partie de prise ou de la partie réceptrice (4 ; 5) agencée sur la section déformable.

3. Raccord limiteur de couple selon une quelconque des revendications précédentes, dans lequel le premier ou le second élément tubulaire (2; 3) possédant la section déformable (6) agencée dessus comprennent par ailleurs une section de liaison (7) en vue de la liaison des premier et second bords respectifs (6a, 6b) de deux sections déformables avoisinantes (6), et, en option, dans lequel la section de liaison (7) possède une forme incurvée qui comprend deux parties de transition reliant lesdits premiers et seconds bords (6a, 6b), chaque partie de transition possédant une forme bionique.

4. Raccord limiteur de couple selon une quelconque des revendications précédentes, dans lequel le premier ou le second élément tubulaire (2 ; 3) ne possédant pas la section déformable (6) agencée dessus comprennent une section conique qui chevauche au moins une partie de la section déformable (6).

5. Raccord limiteur de couple selon une quelconque des revendications ci-dessus, dans lequel le premier élément tubulaire (2) est déplaçable axialement par rapport au second élément tubulaire (3).

6. Raccord limiteur de couple selon la revendication 5, dans lequel le déplacement axial du premier élément tubulaire (2) par rapport au second élément tubulaire (2) accroît ou réduit un biais à la force de retour élastique, en particulier par addition d'une compensation de déviation radiale prédéfinie.

7. Raccord limiteur de couple selon la revendication 5, dans lequel le premier élément tubulaire ou le second élément tubulaire (2 ; 3) possède une pluralité de seconds moyens d'emboîtement (8b) agencés le long de la longueur axiale de ceux-ci, chacun de la pluralité de seconds moyens d'emboîtement (8b) étant positionnés à une position axiale prédéterminée, et l'autre élément tubulaire respectif (3; 2) possédant un premier moyen d'emboîtement (8a) en vue de l'emboîtement avec au moins un de la pluralité de seconds moyens d'emboîtement (8b) afin de définir la position axiale du premier élément tubulaire (2) par rapport au second élément tubulaire (3).

8. Raccord limiteur de couple selon une quelconque des revendications précédentes, dans lequel la force de retour élastique et/ou le seuil de force maximum est défini par : la géométrie et/ou le matériau de la partie de prise (4), la géométrie et/ou le matériau de la partie réceptrice (5), en particulier l'angle, la position et la hauteur de la partie de prise et/ou de la partie réceptrice, le nombre de parties réceptrices et de parties de prise, la rigidité, le matériau et/ou la géométrie de la section déformable (6), la distance entre des premier et second bords respectifs de sections déformables avoisinantes, le nombre de sections déformables, le ratio entre ladite distance et ladite géométrie des sections déformables, et des combinaisons de cela.

9. Raccord limiteur de couple selon une quelconque des revendications précédentes, dans lequel le premier élément tubulaire (2) et le second élément tubulaire (3) sont assemblés par encliquetage ou produits par moulage par injection bicomposantes, en particulier par moulage par injection d'assemblage.

10. Raccord limiteur de couple selon une quelconque des revendications précédentes, dans lequel la partie de couplage (2c) comprend une partie filetée et l'élément de couplage (10) comprend un écrou de raccordement.

11. Raccord limiteur de couple selon la revendication 10, dans lequel la partie de couplage comprend par ailleurs une pluralité de renfoncements d'arrêt (2a') afin de permettre d'inhiber la rotation de l'élément de couplage (10) dans au moins une direction de rotation.
